# EUROPÄISCHE PATENTSCHRIFT

(11) **EP 1 832 982 B1**
(45) Veröffentlichungstag und Bekanntmachung des Hinweises auf die Patenterteilung: **29.12.2010**
(21) Anmeldenummer: 07002316.3
(22) Anmeldetag: 02.02.2007
(51) Int. Cl.: G06F 13/38

(54) **Verfahren zum Einstellen einer Hilfseinheit auf einen Host und Hilfseinheit**
Method for adjusting an auxiliary unit on a host and auxiliary unit
Procédé de réglage d'une unité d'aide sur un hôte et unité auxiliaire

(30) Priorität: 06.03.2006 DE 102006010218
(43) Veröffentlichungstag der Anmeldung: 12.09.2007
(73) Patentinhaber: Giesecke & Devrient GmbH, 81677 München (DE)
(72) Erfinder: Götze, Frank, 81929 München (DE)

(56) Entgegenhaltungen:
- EP-A- 1 168 137
- WO-A-02/42887
- WO-A-97/45788
- WO-A-2004/046942

## Beschreibung

Die Erfindung geht aus von einer Hilfseinheit, wie sie aus dem "Handbuch der Chipkarten", W. Rankl, W. Effing, 4. Auflage, S. 515 bekannt ist. Die beschriebene Hilfseinheit hat die Gestalt eines USB-Tokens mit einem integrierten Fingerabdrucksensor und einem Chipkartenmikrocontroller. Der USB-Token wird an die USB-Schnittstelle eines Host-Computers angesteckt und stellt diesem die Funktion der Fingerabdrucküberprüfung zur Verfügung. Der Datenaustausch zwischen Host-Computer und Hilfseinheit erfolgt nach dem Master-Slave-Prinzip, gemäß dem der Host-Computer, als Master, Kommandos an die Hilfseinheit schickt, zu welchen diese, als Slave, Antworten bildet und an den Host-Computer zurücksendet. Das Master-Slave-Prinzip ist ebenfalls in dem erwähnten "Handbuch der Chipkarten", S. 377 ff., beschrieben.

Außer der Funktion der Fingerabdruckprüfung werden Hilfseinheiten der vorbeschriebenen Art auch zur Bereitstellung einer Vielzahl von anderen Funktionen eingesetzt. In Betracht kommen beispielsweise eine Funktion als Speicher, als Softwareschlüssel oder als Miniserver. Hilfseinheiten aller dieser Typen sind verfügbar und haben sich bereits bewährt.

Seine Grenze findet der Einsatz solcher bekannter Hilfseinheiten derzeit bei komplexen Funktionen, die eine genaue Abstimmung der Hilfseinheit auf den verwendeten Host-Computer erfordern. Als problematisch hat sich dabei insbesondere die Einstellung einer Hilfseinheit auf ein in einem Host-Computer verwendetes Betriebssystem erwiesen. In gängigen Standards für einen nach dem Master-Slave-Prinzip ausgeführten Datenaustausch zwischen Hilfseinheiten und Host-Computern ist die explizite Mitteilung des von einem Host-Computer verwendeten Betriebssystems nicht vorgesehen.

Aus dem Dokument WO2004046942 ist ein USB Netzwerkadapter bekannt, der windows, Linux und Apple Betriebssysteme unterstützt. Der Adapter ist mit zwei USB Konfigurationen ausgestattet, eine für windows und eine für die anderen Betriebssysteme.

Aufgabe der Erfindung ist es daher, für eine Hilfseinheit, die nach dem Master-Slave-Prinzip mit einem Host-Computer kommuniziert, ein Verfahren anzugeben, das es erlaubt, die Hilfseinheit individuell auf einen Host-Computer einzustellen.

Diese Aufgabe wird gelöst durch ein Verfahren mit den Merkmalen des Anspruchs 1 sowie durch eine Hilfseinheit mit den Merkmalen des Anspruchs 5.

Das erfindungsgemäße Verfahren erlaubt es einer Hilfseinheit das von einem Host-Computer verwendete Betriebssystem zu identifizieren und die Hilfseinheit darauf einzustellen. Dadurch lassen sich Inkompatibilitäten vermeiden. Sofern vorhanden können gegebenenfalls gezielt Fehlerbehebungsroutinen genutzt werden. Vorteilhaft können damit Hilfseinheiten angeboten werden, die an Host-Computern mit unterschiedlichen Betriebssystem unabhängig vom jeweils vorgefundenen Betriebssystem eines Host-Computers gleichermaßen gut funktionieren. Dadurch verbessert sich die Anwendungsfreundlichkeit der Hilfseinheit. Der Datenaustausch zwischen Hilfseinheit und Host-Computer kann dabei hinsichtlich Schnelligkeit und benötigten Prozessorressourcen optimal durchgeführt werden. Auf Seiten des Host-Computers sind dazu keinerlei Eingriffe in der Hardware oder der Software erforderlich. In bevorzugter Ausgestaltung ist die Hilfseinheit ein tragbarer Datenträger auf Basis einer Chipkarte. Erfindungsgemäß erfolgt die Betriebssystemerkennung durch eine Prüfung, ob im Rahmen eines Datenaustausches mit einem Host-Computer an einer definierten Stelle innerhalb des Datenaustausches ein bestimmtes Kommando in der Hilfseinheit eingeht.

Unter Bezugnahme auf die Zeichnung wird ein Ausführungsbeispiel der Erfindung nachfolgend näher erläutert.

Es zeigen:
- Fig.1: ein System bestehend aus einer Hilfseinheit und einem Host-Computer,
- Fig. 2: ein Flußdiagramm einer Betriebssystemerkennung durch eine Hilfs- einheit.

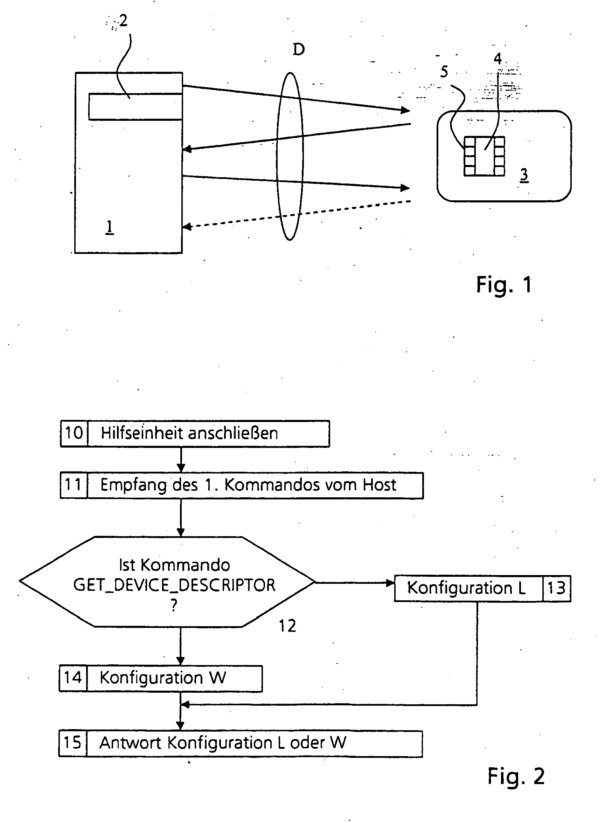

Fig.1 zeigt einen Host-Computer 1 mit einer Schnittstelle 2 zum Anschluß einer Hilfseinheit 3 sowie eine Hilfseinheit 3 mit einem Mikrocontroller 4 und einer zu der Schnittstelle 2 korrespondierenden Schnittstelle 5. Über die Schnittstelle 2, 5 führen Host-Computer 1 und Hilfseinheit 3 einen unidirektionalen, d.h. stets von dem Host-Computer initiierten und getriebenen Datenaustausch D.

Der im folgenden nur noch als Host bezeichnete Host-Computer 1 ist beispielsweise ein PC und besitzt alle üblichen Elemente eines Computers. Er arbeitet mit einem üblichen Betriebssystem. Typischerweise verwendet er eines der Betriebssysteme Windows oder LINUX. Die Schnittstelle 2 arbeitet kontaktlos oder kontaktbehaftet und ist zweckmäßig von einem standardisierten Typ. Unter anderem kann die Schnittstelle 2 eine Schnittstelle gemäß dem USB-Standard, gemäß dem Firewire-Standard oder gemäß der ISO-Norm 7816 für Chipkarten sein.

Bei der Hilfseinheit 3 handelt es sich vorzugsweise um einen tragbaren Datenträger auf der Basis einer Chipkarte, wie er etwa aus dem erwähnten "Handbuch der Chipkarten", 4. Auflage, in mehreren Ausgestaltungen entnehmbar ist. Die Hilfseinheit weist insbesondere einen Mikrocontroller 4 auf, der in verglichen mit dem Host 1 leistungsmäßig und vor allem räumlich reduzierter Form ebenfalls alle wesentlichen Elemente eines Computers besitzt. Aufgrund ihrer gegenüber dem Host 1 untergeordneten Rolle besitzt die Hilfseinheit 3 häufig keine oder nur beschränkte Ein- und Ausgabemittel; diese können etwa nur in einem Fingerabdrucksensor bestehen. Der Mikrocontroller 4 kann aus mehreren unabhängigen Komponenten bestehen, die über geeignete auf den Datenträger ausgebildete Verbindungen verbunden sind. Der Mikrocontroller 4 arbeitet typischerweise mit einem proprietären Betriebssystem, kann aber auch mit einem üblichen Betriebssystem wie Windows oder LINUX oder daraus abgeleiteten Formen ausgestattet sein.

Die Schnittstelle 5 ist korrespondierend zur Schnittstelle 2 als kontaktlose oder kontaktbehaftete Schnittstelle ausgeführt und genügt wie jene zweckmäßig einem Standard wie USB, Firewire oder ISO 7816. Die Hilfseinheit 3 hat beispielsweise die Gestalt einer Chipkarte oder eines USB-Tokens.

Der Datenaustausch D zwischen Host 1 und Hilfseinheit 3 erfolgt gemäß dem Master-Slave-Prinzip. Danach wird der Datenaustausch zwischen einem Host 1 und einer Hilfseinheit 3 immer von dem Host 1 angestoßen. Der Host 1 sendet der Hilfseinheit 3 dabei jeweils ein Kommando, auf das diese antwortet.

Die Hilfseinheit 3 bietet eine Funktion an, die auf dem Host 1 nicht zur Verfügung steht oder nicht zur Verfügung gestellt werden kann oder soll. Beispielsweise kann die Hilfseinheit 3 eine Authentisierungsfunktion bereitstellen, die es einer Person gestattet, sich durch Präsentation eines biometrischen Merkmals, etwa eines Fingerabdrucks, gegenüber einem Host 1 zu authentifizieren. In einer anderen Anwendung fungiert die Hilfseinheit 3 als Speicher für sensible persönliche Daten oder als Signaturkarte zur Erzeugung einer digitale Signatur.

Der Datenaustausch D zwischen Hilfseinheit 3 und Host 1 erfolgt gemäß einem Standard, der in der Regel der eingesetzten Schnittstelle 2, 5 entspricht. Im folgenden wird angenommen, daß die Schnittstelle 2, 5 eine USB-Schnittstelle ist und der Datenaustausch D gemäß dem USB-Standard erfolgt. Abhängig vom Betriebssystem des Hosts 1 ergeben sich dabei auf Seiten der Hilfseinheit 3 unterschiedliche Einstellungen, um den Datenaustausch D jeweils in bestmöglicher Weise führen zu können.

Der Mikrocontroller 4 der Hilfseinheit 3 ist deshalb dazu eingerichtet unterschiedliche interne Einstellungen vorzunehmen, um sich an das Betriebssystem eines Hosts 1 anzupassen. Der Mikrocontroller 4 verfügt dazu über Erkennungsmittel, um den jeweiligen Betriebssystemtyp eines Hosts 1 festzustellen. Diese Erkennungsmittel sind vorzugsweise in Softwareform realisiert.

Fig. 2 veranschaulicht die Funktionsweise der Erkennungsmittel in einem Flußdiagramm. Die Funktionsweise basiert auf der Erkenntnis, daß ungeachtet einer Standardisierung die genaue Kommandofolge im eröffnenden Datenaustausch unmittelbar nach Anschluß einer Hilfseinheit 3 an einen Host 1 regelmäßig davon abhängt, welches Betriebssystem auf dem Host 1 realisiert ist. Abhängig vom Betriebssystem ergeben sich geringfügig unterschiedliche Abläufe.

Im USB-Standard ist - genauso wie in anderen Standards - insbesondere die Kommandoabfolge zur Eröffnung eines Datenaustausches D definiert. Dabei ist zumindest für bestimmte Kommandos eine definierte Abfolge festgelegt. Abhängig vom jeweils auf Seiten des Hosts 1 eingesetzten Betriebssystem bestehen dennoch kleine Unterschiede in Bezug auf die Abfolge der Gesamtheit der Kommandos. Arbeitet ein Host 1 mit dem Betriebssystem Windows, sendet er einer Hilfseinheit 3 im Rahmen eines dem USB-Standard genügenden Datenaustausches D nach Anschluß zunächst das Kommando GET_DESCRIPTOR". Die Hilfseinheit 3 antwortet darauf mit der definierten Rücksendung eines Wertes, der den Typ der Hilfseinheit 3 bezeichnet. Nach Eingang des Typwertes im Host 1 übersendet dieser der Hilfseinheit 3 wiederum das Kommando "SET_ADDRESS", das der Hilfseinheit 3 eine vom Host 1 vorgegebene Adresse zuordnet.

Arbeitet der Host 1 dagegen mit dem Betriebssystem LINUX, übersendet er nach Neuanschluß einer USB-Hilfseinheit 3 dieser unmittelbar das Kommando "SET_ADDRESS" und ordnet der Hilfseinheit 3 entsprechend unmittelbar eine angegebene Adresse zu. Erst anschließend übersendet der Host 1 der Hilfseinheit 3 das Kommando "GET_DESCRIPTOR". Anhand des ersten vom Host 1 an die Hilfseinheit 3 übersandten Kommandos läßt sich mithin feststellen, ob der Host 1 das Betriebssystem Windows oder LINUX verwendet.

Das in Fig. 2 dargestellte, von den Erkennungsmitteln der Hilfseinheit 3 ausgeführte Verfahren beginnt mit dem Anschluß der Hilfseinheit 3 an einen Host 1, Schritt 10. Sowie sie vom Host 1 als USB-Einheit erkannt und eingeschaltet ist, erwartet die Hilfseinheit 3 den Empfang des ersten Kommandos von dem Host 1, Schritt 11.

Geht daraufhin das erste Kommando vom Host 1 ein, prüft die Hilfseinheit 3 dieses darauf, Schritt 12, ob es das Kommando "GET_DESCRIPTOR" ist. Ist das der Fall, konfiguriert sich der Mikrocontroller 4 der Hilfseinheit 3 gemäß dem Betriebssystem Windows, Schritt 13.

Ergibt sich bei der Prüfung in Schritt 12, daß das erste vom Host 1 empfangene Kommando nicht das Kommando "GET_DESCRIPTOR" ist, konfiguriert sich der Mikrocontroller 4 der Hilfseinheit 3 im folgenden Schritt 14 gemäß dem Betriebssystem LINUX.

Entsprechend der in den Schritten 13 oder 14 eingestellten Konfiguration bildet der Mikrocontroller 4 nachfolgend eine Antwort und übermittelt diese an den Host 1, Schritt 15. Anschließend erfolgt der weitere Datenaustausch D. gemäß der in den Schritten 13 bzw. 14 gewählten Einstellung.

Das vorstehende Erkennungsverfahren kann in analoger Weise auf weitere mögliche Betriebssysteme ausgeweitet werden. Soweit eine Unterscheidung nicht am ersten Kommando oder einer Folge von auf das erste folgenden Kommandos möglich ist, kann die Erkennung auch in mehreren Schleifen erfolgen, in denen das in Fig. 2 veranschaulichte Verfahren dann für mehrere zur Unterscheidung geeignete Kommandos wiederholt durchlaufen wird. Dabei ist es nicht erforderlich, daß die Erkennung anhand des ersten oder eines unmittelbar nachfolgenden Kommandos erfolgt. Vielmehr kann die Erkennung allgemein anhand eines oder mehrerer bestimmter Kommandos erfolgen, deren Erscheinen an einer bestimmten Position in einer definierten Kommandoabfolge die Verwendung eines bestimmten Betriebssystems anzeigt.

## Patentansprüche

1. Verfahren zum Einstellen einer Hilfseinheit auf ein Betriebssystem eines Host-Computers, mit dem die Hilfseinheit einen Datenaustausch nach dem Master-Slave-Prinzip gemäß den USB-Standard führt, in dessen Rahmen der Host-Computer der Hilfseinheit Kommandos übersendet, auf die die Hilfseinheit antwortet, wobei in der Hilfseinheit (3) wenigstens zwei Konfigurationen zur Einstellung auf wenigstens zwei unterschiedliche Betriebssysteme bereitgestellt werden, wobei sich die wenigstens zwei Betriebssysteme in der Kommanden abfolge bei der Eröffnung eines Datenaustauschs zwischen einer Hilfseinheit und einem Host-Computer unterscheiden, **dadurch gekennzeichnet, daß** die Hilfseinheit (3) im eröffnenden Datenaustausch unmittelbar nach Anschluß an einen Host-Computer (1) ein an einer definierten Position in der Abfolge der Kommandos von dem Host-Computer (1) erhaltenes Kommando darauf prüft (12), ob es mit einem Kommando übereinstimmt, das bei Vorliegen eines ersten der wenigstens zwei Betriebssysteme an dieser Position zu erwarten ist, um sich bei Übereinstinimung durch Einstellung der zu dem ersten Betriebssystem gelösenden Konfiguration auf das erste Betriebssystem zu Konfigurieren.

2. Verfahren nach Anspruch 1, **dadurch gekennzeichnet, daß** der Datenaustausch (D) gemäß einem Standard geführt wird, der zumindest für bestimmte Kommandos eine definierte Abfolge festlegt.

3. Verfahren nach Anspruch 1, **dadurch gekennzeichnet, daß** das geprüfte Kommando das erste erhaltene Kommando nach Anschluß einer Hilfseinheit (3) an einen Host-Computer (1) ist.

4. Verfahren nach Anspruch 1, **dadurch gekennzeichnet, daß** eine bestimmte Konfiguration eingestellt wird, wenn das geprüfte Kommando nicht mit dem erwarteten übereinstimmt.

5. Hilfseinheit zum Anschluß an einen Host-Computer für einen Datenaustausch nach dem Master-Slave-Prinzip gemäß den USB-standard, mit einer Schnittstelle und einem Mikrocontroller (4) zur Entgegennahme von Kommandos bzw. zur Erzeugung von Antworten von bzw. an einen Host-Computer (1), **dadurch gekennzeichnet, daß** in dem Mikrocontroller (4) wenigstens zwei Einstellungen für wenigstens zwei unterschiedliche von einem Host-Computer (1) verwendbare Betriebssysteme gespeichert sind, wobei sich die wenigstens zwei Betriebssysteme in der Kommanden abfolge bei der Eröffnung eines Datenaustauschs zwischen einer Hilfseinheit und einem Host-Computer unterscheiden und der Mikrocontroller (4) im eröffnenden Datenaustausch unmittelbar nach Anschluß an einen Host-Computer (1) ein an einer definierten Position in einer Kommandoabfolge erscheinendes Kommando darauf prüft, ob es mit einem Kommando übereinstimmt, das bei Verwendung eines ersten der wenigstens zwei Betriebssysteme durch den Host-Computer (1) an dieser Position zu erwarten ist, um die Hilfseinheit bei Übereinstimmung durch Einstellung der zu dem ersten Betriebssystem gehörenden Einstellung auf das erste Betriebssystem einzustellen.

## Claims

1. A method for adjusting an auxiliary unit to an operating system of a host computer with which the auxiliary unit conducts a data exchange on the master/slave principle according to the USB standard, within the framework of which the host computer sends commands to the auxiliary unit to which the auxiliary unit responds, wherein in the auxiliary unit (3) there are provided at least two configurations for adjustment to at least two different operating systems, wherein the at least two operating systems differ in the command sequence upon the opening of a data exchange between an auxiliary unit and a host computer, **characterized in that** the auxiliary unit (3) in the opening data exchange immediately after connection to a host computer (1) checks (12) a command received at a defined position in the sequence of the commands from the host computer (1) as to whether it matches a command which is to be expected at said position upon the presence of a first of the at least two operating systems, in order to configure itself to the first operating system, in case of a match, by adjustment of the configuration belonging to the first operating system.

2. The method according to claim 1, **characterized in that** the data exchange (D) is conducted according to a standard which specifies a defined sequence at least for certain commands.

3. The method according to claim 1, **characterized in that** the checked command is the first received command after connection of an auxiliary unit (3) to a host computer (1).

4. The method according to claim 1, **characterized in that** a certain configuration is adjusted when the checked command does not match that expected.

5. An auxiliary unit for connection to a host computer for a data exchange on the master/slave principle according to the USB standard, having an interface and a microcontroller (4) for acceptance of commands from, and generation of responses to, a host computer (1), **characterized in that** in the microcontroller (4) there are stored at least two adjustments for at least two different operating systems employable by a host computer (1), wherein the at least two operating systems differ in the command sequence upon the opening of a data exchange between an auxiliary unit and a host computer, and the microcontroller (4) in the opening data exchange immediately after connection to a host computer (1) checks a command appearing at a defined position in a command sequence as to whether it matches a command which is to be expected at said position upon use of a first of the at least two operating systems by the host computer (1), in order to adjust the auxiliary unit to the first operating system, in case of a match, by adjustment of the adjustment belonging to the first operating system.

## Revendications

1. Procédé de réglage d'une unité auxiliaire de manière correspondante à un système d'exploitation d'un ordinateur hôte avec lequel l'unité auxiliaire effectue un échange de données selon le principe maître-esclave conformément au standard USB, dans le cadre duquel l'ordinateur hôte envoie à l'unité auxiliaire des commandes auxquelles l'unité auxiliaire répond, au moins deux configurations destinées au réglage de manière correspondante à au moins deux systèmes d'exploitation différents étant mises à disposition dans l'unité auxiliaire (3), les au moins deux systèmes d'exploitation se différenciant quant à la séquence des commandes lors de l'ouverture d'un échange de données entre une unité auxiliaire et un ordinateur hôte, **caractérisé en ce que**, lors de l'échange de données démarrant immédiatement après branchement sur un ordinateur hôte (1), l'unité auxiliaire (3) examine (12) une commande reçue de la part de l'ordinateur hôte (1) à une position définie dans la séquence des commandes pour déterminer si elle coïncide avec une commande à laquelle on peut s'attendre à cette position en présence d'un premier des au moins deux systèmes d'exploitation, afin, en cas de coïncidence, de se configurer de manière correspondante au premier système d'exploitation par réglage de la configuration appartenant au premier système d'exploitation.

2. Procédé selon la revendication 1, **caractérisé en ce que** l'échange de données (D) est effectué selon un standard qui fixe au moins pour certaines commandes une séquence définie.

3. Procédé selon la revendication 1, **caractérisé en ce que** la commande examinée est la première commande reçue après branchement d'une unité auxiliaire (3) sur un ordinateur hôte (1).

4. Procédé selon la revendication 1, **caractérisé en ce qu'**une certaine configuration est réglée quand la commande examinée ne coïncide pas avec celle qui est attendue.

5. Unité auxiliaire destinée à être branchée sur un ordinateur hôte pour un échange de données selon le principe maître-esclave conformément au standard USB, comprenant une interface et un microcontrôleur (4) pour l'acceptation de commandes ou pour la génération de réponses d'un ou à un ordinateur hôte (1), **caractérisé en ce qu'**au moins deux réglages pour au moins deux systèmes d'exploitation différents utilisables par un ordinateur hôte (1) sont mémorisés dans le microcontrôleur (4), les au moins deux systèmes d'exploitation se différenciant quant à la séquence des commandes lors de l'ouverture d'un échange de données entre une unité auxiliaire et un ordinateur hôte, et **en ce que**, lors l'échange de données démarrant immédiatement après branchement sur un ordinateur hôte (1), le microcontrôleur (4) examine une commande apparaissant à une position définie dans une séquence des commandes pour déterminer si elle coïncide avec une commande à laquelle on peut s'attendre à cette position lors de l'utilisation par l'ordinateur hôte (1) d'un premier des au moins deux systèmes d'exploitation, afin, en cas de coïncidence, de régler l'unité auxiliaire de manière correspondante au premier système d'exploitation par réglage du réglage appartenant au premier système d'exploitation.
